# FASCICULE DE BREVET EUROPEEN

(11) **EP 3 772 191 B1**
(45) Date de publication et mention de la délivrance du brevet: **28.07.2021**
(21) Numéro de dépôt: 20188296.6
(22) Date de dépôt: 29.07.2020
(51) Int. Cl.: H04B 7/185

(54) **PROCEDE DE DETERMINATION D'UNE PUISSANCE MAXIMALE D'EMISSION D'UN SATELLITE NON-GEOSTATIONNAIRE**
VERFAHREN ZUR BESTIMMUNG EINER MAXIMALEN EMISSIONSLEISTUNG EINES NICHT GEOSTATIONÄREN SATELLITEN
METHOD FOR DETERMINING A MAXIMUM TRANSMISSION POWER OF A NON-GEOSTATIONARY SATELLITE

(30) Priorité: 31.07.2019 FR 1908697
(43) Date de publication de la demande: 03.02.2021
(73) Titulaire: THALES, 92400 Courbevoie (FR)
(72) Inventeur: LEVY, Jean-Christophe, 31000 Toulouse (FR); GUERIN, Arnaud, 31000 Toulouse (FR); GUERIN, Alexandre, 31000 Toulouse (FR)
(74) Mandataire: Marks & Clerk France

(56) Documents cités:
- EP-A1- 3 182 615
- WO-A1-2017/177343
- WO-A2-02/41093
- US-A- 6 011 951
- US-A1- 2016 278 063

## Description

L'invention concerne un procédé de détermination, mis en œuvre par ordinateur, d'une puissance maximale d'émission d'un satellite d'une constellation de satellites non-géostationnaires pour respecter un niveau de puissance d'interférence réglementaire vis-à-vis de satellites géostationnaires.

Un angle topocentrique est un angle formé par les directions respectives entre un point de la Terre et un satellite non-géostationnaire, et le point sur Terre et un satellite géostationnaire, autrement dit un angle formé à partir d'un point sur Terre entre un satellite non-géostationnaire et un satellite géostationnaire.

L'angle α est l'angle topocentrique minimal pour un satellite non-géostationnaire et un point sur Terre donné. Autrement dit, l'angle a est obtenu pour le satellite géostationnaire qui se trouve à la position sur l'arc géostationnaire qui minimise l'angle topocentrique.

La puissance maximale d'émission est déterminée selon la valeur de l'angle a pour une station terrestre géostationnaire en un point de la Terre et pour un satellite non-géostationnaire de la constellation émettant vers cette station, de manière à respecter un niveau de puissance d'interférence réglementaire vis-à-vis des satellites géostationnaires.

Afin de protéger les émissions et réceptions de signaux des satellites géostationnaires, il est nécessaire de vérifier que les satellites d'une constellation non-géostationnaire n'interférent pas avec les satellites géostationnaires et leurs stations terrestres. Pour cela, la règlementation internationale impose, dans certaines bandes de fréquence, des contraintes de niveaux de brouillage émis par les satellites des constellations non-géostationnaires pouvant se traduire par des contraintes sur la puissance d'émission de ces constellations non-géostationnaires.

Par ailleurs, plus un brouillage est important, moins il doit être fréquent, la réglementation internationale exprime donc ces contraintes sous forme de limites statistiques de puissance de brouillage. Or, limiter le niveau de brouillage revient à limiter la puissance d'émission des satellites de la constellation non-géostationnaire et donc revient à contraindre la capacité de la constellation.

Afin de limiter la contrainte sur la capacité de la constellation, il est donc important de déterminer le plus précisément possible les contraintes opérationnelles de puissance pour minimiser l'impact sur la capacité de la constellation tout en assurant la protection des systèmes géostationnaires.

Actuellement, ce problème est formulé de la manière suivante : étant donnée une puissance rayonnée par un satellite non-géostationnaire appartenant à une constellation non-géostationnaire, quel doit être l'espacement minimal angulaire entre les satellites de la constellation et les satellites géostationnaires pour respecter le niveau de brouillage requis.

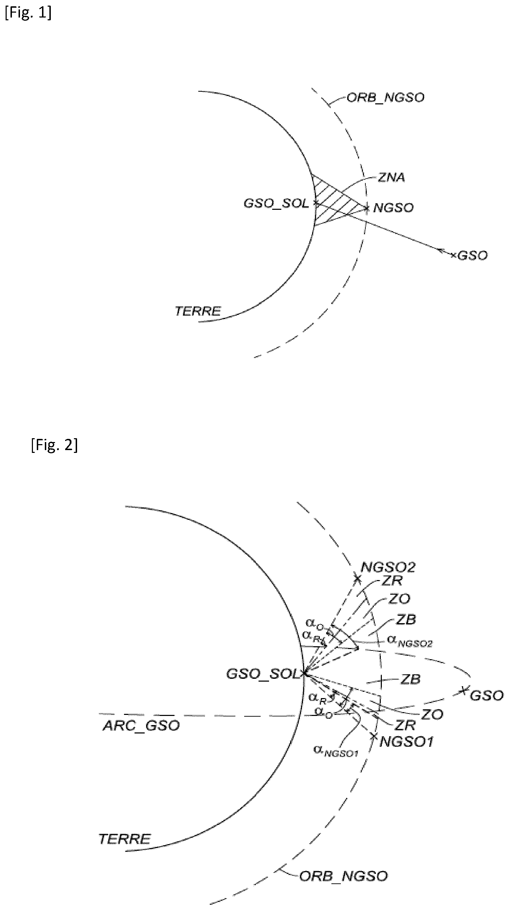

La figure 1 décrit ce problème. Une station terrestre GSO_SOL reçoit des signaux d'un satellite géostationnaire GSO. Un satellite non-géostationnaire NGSO, se déplaçant sur une orbite ORB_NGSO d'une constellation de satellites non-géostationnaires, peut interférer avec ces signaux et les brouiller. On cherche donc à connaître les dimensions d'une zone ZNA, zone non-adressable, dans laquelle le satellite NSGO peut émettre à une puissance réduite vers la station sol GSO_SOL. Actuellement, la définition de cette zone ZNA est assez conservatrice, et la puissance d'émission, vers la station sol GSO_SOL, du satellite NGSO dans la zone ZNA est fortement limitée.

Le document US 2016/278063 A1 divulgue un procédé, mis en œuvre par ordinateur, de détermination d'une puissance maximale d'émission d'un satellite non-géostationnaire en direction d'une station terrestre.

L'invention vise à remédier aux inconvénients précités de l'art antérieur, plus particulièrement elle vise à calculer les puissances maximales d'émission de la constellation de satellites non-géostationnaires afin de minimiser l'impact sur sa capacité et d'assurer la protection des systèmes géostationnaires.

Un objet de l'invention est donc un procédé, mis en œuvre par ordinateur, de détermination d'une puissance maximale d'émission d'un satellite non-géostationnaire en direction d'une station terrestre, le procédé comprenant les étapes de :
- déterminer la valeur minimale d'un angle topocentrique, formé entre d'une part la direction entre le satellite non-géostationnaire et la station terrestre et d'autre part entre la station terrestre et un point de l'arc géostationnaire correspondant à l'orbite d'une constellation de satellites géostationnaires ;
- comparer, en valeur absolue, la valeur minimale de l'angle topocentrique à au moins deux valeurs seuils de sorte que :
- si ladite valeur minimale est inférieure, en valeur absolue, au premier seuil, définir la puissance maximale d'émission du satellite non-géostationnaire à une première valeur ;
- si ladite valeur minimale est comprise, en valeur absolue, entre le premier seuil et le second seuil, définir la puissance maximale d'émission du satellite non-géostationnaire à une deuxième valeur, supérieure à la première valeur ;
- si ladite valeur minimale est supérieure, en valeur absolue au second seuil, définir la puissance maximale d'émission du satellite non-géostationnaire à une troisième valeur, supérieure à la deuxième valeur ;
la première, la deuxième et la troisième valeur de puissance maximale d'émission, le premier et le second seuil étant déterminés de manière à minimiser l'écart entre une distribution des niveaux de puissance reçus par la station terrestre et cumulés sur un intervalle de temps et une distribution de référence, la distribution des niveaux de puissance reçus et cumulés étant inférieure à la distribution de référence.

Selon des modes de réalisation :
- Les seuils et les valeurs de puissance sont déterminés par les étapes suivantes :
   1) Pour une valeur du premier seuil angulaire et pour une valeur du second seuil angulaire : simulations des niveaux de puissance reçus par la station terrestre et cumulés sur un intervalle de temps, comparaison d'une distribution des niveaux de puissance cumulés à la distribution de référence et détermination de la valeur du troisième seuil de puissance de manière à minimiser l'écart entre la distribution de référence et la distribution des niveaux de puissance cumulés ;
   2) Pour la même valeur de premier seuil angulaire de l'étape 1) et pour la valeur de troisième seuil de puissance déterminée à l'étape 1) : simulations, pour plusieurs valeurs de second seuil angulaire, des niveaux de puissance reçus par la station et cumulés sur un intervalle de temps, comparaison d'une distribution des niveaux de puissance cumulés à la distribution de référence pour chaque valeur de second seuil angulaire et détermination de la valeur du second seuil angulaire parmi les valeurs simulées de manière à minimiser l'écart entre la distribution de référence et la distribution des niveaux de puissance cumulés, et de manière à ce que la différence entre le second seuil angulaire et le premier seuil angulaire soit minimale.
- Les étapes 1) et 2) sont répétées successivement, la valeur du premier seuil angulaire étant différente entre chaque répétition, de manière à obtenir un triplet de valeurs du premier seuil, du second seuil et de la troisième valeur de puissance à chaque répétition.
- Le procédé comprend l'étape suivante exécutée après la répétition des étapes 1) et 2) :
   3) Détermination du triplet de valeurs du premier seuil, du second seuil et de la troisième valeur de puissance parmi les triplets obtenus par les répétitions des étapes 1) et 2) de manière à respecter un critère de qualité de service minimale rendue par un système non-géostationnaire auquel appartient le satellite non-géostationnaire.
- L'étape 3) comprend, pour chaque triplet de valeurs et pour chaque instant d'un intervalle de temps, la détermination des satellites non-géostationnaires ayant une valeur minimale d'angle topocentrique supérieure au premier seuil du triplet, et la simulation des puissances émises par ces satellites déterminés vers la station terrestre et des puissances reçues par la station terrestre afin de déterminer un débit reçu par la station terrestre à chaque instant et pour chaque triplet de manière à sélectionner l'un des triplets de valeurs.
- Le triplet de valeurs déterminé est celui dont la somme des débits à chaque instant est la plus élevée.
- Le triplet de valeurs déterminé est celui dont le débit est maximal pour une proportion prédéterminée de l'intervalle de temps.
- Le procédé comprend les étapes suivantes effectuées après l'étape 3) :
   4) Pour chaque instant de l'intervalle de temps, sélectionner des satellites non-géostationnaires ayant une valeur d'angle topocentrique minimale supérieure au premier seuil angulaire ;
   5) simulation des niveaux de puissance émis par les satellites sélectionnés à l'étape 4) et reçus par la station terrestre cumulés sur l'intervalle de temps ;
   6) identification des instants de l'intervalle de temps et ajustement de la troisième valeur maximale de puissance de manière à minimiser l'écart entre une distribution des niveaux de puissance reçus par la station terrestre et cumulés sur l'intervalle de temps et la distribution de référence, la distribution de référence étant supérieure aux niveaux de puissance cumulés.
- Le procédé comprend également une étape de raffinement consistant à déterminer des seuils angulaires et des seuils de puissance supplémentaires de manière à réduire l'écart entre les niveaux de puissance cumulés de l'étape 3) et le niveau de référence, les niveaux de puissance cumulés étant inférieurs au niveau de référence.
- Le procédé est mis en œuvre pour une pluralité d'hypothèses de positions de stations terrestres.
- Le procédé comprend également une sélection d'au moins un satellite d'une constellation de satellites non-géostationnaires à chaque instant, les niveaux de puissance reçus par la station résultant de signaux émis par les satellites sélectionnés ; et dans ce cas, le satellite sélectionné peut être celui présentant la puissance reçue par la station terrestre la plus élevée, ou celui situé au nadir de la station terrestre.
- Le procédé comprend une étape de correction de la première, de la seconde et de la troisième valeurs maximales de puissance d'émission d'un satellite non-géostationnaire de la constellation, situé en un point différent du nadir de la station terrestre, de manière à ce que la puissance reçue par la station terrestre de ce satellite de la constellation soit égale à la puissance reçue par la station terrestre du satellite sélectionné situé au nadir.

Un autre objet de l'invention est un programme d'ordinateur comportant des instructions pour l'exécution du procédé de détermination d'une puissance maximale d'émission d'un satellite non-géostationnaire selon l'invention, lorsque le programme est exécuté par un processeur.

Encore un autre objet de l'invention est un support d'enregistrement lisible par un processeur sur lequel est enregistré un programme comportant des instructions pour l'exécution du procédé de détermination d'une puissance maximale d'émission d'un satellite non-géostationnaire selon l'invention ; lorsque le programme est exécuté par un processeur.

D'autres caractéristiques, détails et avantages de l'invention ressortiront à la lecture de la description faite en référence aux figures annexées données à titre d'exemple et qui représentent, respectivement :
- La Figure 1, déjà décrite, un schéma représentant les contraintes actuelles des constellations de satellites no-géostationnaires selon l'art antérieur ;
- La Figure 2, un schéma du principe du procédé selon l'invention ;
- La Figure 3, une figure représentant un profil de puissance d'émission obtenu par l'invention ;
- La Figure 4, un diagramme d'antenne d'un satellite non-géostationnaire permettant de déterminer le troisième seuil de puissance du profil déterminé par le procédé selon l'invention ;
- La Figure 5, une représentation des zones d'émission du point de vue d'un satellite non-géostationnaire, les zones étant déterminées par le procédé selon l'invention ;
- La Figure 6, un schéma des étapes du procédé selon un premier mode de réalisation de l'invention ;
- La Figure 7a, un schéma détaillant la réalisation des étapes 1) et 2) du procédé selon le même mode de réalisation ;
- La Figure 7b, un schéma détaillant la réalisation de l'étape 4) du procédé ;
- La Figure 8, un schéma détaillant la réalisation de la troisième étape du procédé selon un mode de réalisation de l'invention ; et
- La Figure 9, une figure représentant un profil de niveau de puissance reçu par un point sur Terre en fonction des latitude et longitude de ce point sur Terre obtenu par l'invention.

La Figure 2 présente un schéma d'application du procédé selon l'invention. Le procédé a pour objectif de définir des zones (ZO, ZR, ZB) dans lesquelles la puissance d'émission vers la station terrestre GSO_SOL d'un satellite NSGO1 ou NGSO2 est limitée, les satellites NGSO1 et NGSO2 appartenant à une constellation de satellites non-géostationnaires ayant une orbite définie ORB_NGSO et émettant vers un point sur Terre GSO_SOL, et également de définir les valeurs de puissance d'émission maximale au sein de ces zones.

La définition de ces zones permet de minimiser les interférences entre des satellites de la constellation NGSO et les systèmes géostationnaires comprenant des satellites géostationnaires GSO de l'arc géostationnaire ARC_GSO et des stations terrestres GSO_SOL, et plus particulièrement de minimiser les interférences entre les satellites de la constellation NGSO1 et NGSO2 émettant vers la station terrestre GSO_SOL et les satellites géostationnaires GSO en liaison avec cette même station terrestre GSO_SOL.

Pour cela, on suppose que la constellation de satellites non-géostationnaires émet vers un point sur Terre sur lequel se trouve une station terrestre géostationnaire GSO_SOL, et on définit l'angle topocentrique minimal a pour ce point sur Terre et les satellites non-géostationnaires de la constellation. L'angle topocentrique est l'angle formé depuis un point sur Terre et entre un satellite non-géostationnaire et un satellite géostationnaire. L'angle α est l'angle topocentrique minimal parmi tous les angles topocentriques défini par rapport à tous les satellites géostationnaires de l'arc géostationnaire ARC_GSO.

Par exemple, sur la figure 2, pour le satellite non-géostationnaire NGSO1 émettant vers la station terrestre GSO_SOL, l'angle topocentrique minimal α est αNGSO1, tandis que pour le satellite non-géostationnaire NGSO2 émettant vers la même station terrestre GSO_SOL, l'angle topocentrique minimal α est αNGSO2.

Les zones ZR, ZO et ZB définies par le procédé sont des zones angulaires définies en fonction de valeurs seuils angulaires αr et αo. Les valeurs seuils angulaires αr et αo représentent des angles topocentriques minimaux α. Les seuils angulaires αr (premier seuil angulaire) et αo (second seuil angulaire) permettent de définir la première zone ZR, pour laquelle l'angle topocentrique minimal α, formé par le satellite non-géostationnaire et une station terrestre vis-à-vis de l'arc géostationnaire est inférieur à αr en valeur absolue ; la seconde zone ZO, pour laquelle ce même angle α est compris entre ar et αo en valeur absolue et la troisième zone ZB pour laquelle ce même angle α est supérieur à αo en valeur absolue.

Dans chacune des zones ZR, ZO et ZB, la puissance d'émission des satellites non-géostationnaires, plus précisément la puissance isotrope rayonnée équivalente (PIRE) dans la direction de la station terrestre GSO_SOL, est limitée à une valeur particulière de puissance. Dans la première zone ZR, la puissance d'émission maximale est limitée à PR, dans la seconde zone ZO, la puissance d'émission maximale est limitée à PO supérieure à PR et dans la troisième zone ZB, la puissance d'émission maximale est limitée à Pmax supérieure à PO.

Ainsi, sur la figure 2, les seuils angulaires αr et αo autour de deux satellites non-géostationnaires NGSO1 et NGSO2 sont représentés. On compare les valeurs d'angle topocentrique minimales αNGSO1 et αNGSO2 à ces seuils angulaires pour déterminer dans quelle zone se trouve le satellite non-géostationnaire et donc à quelle puissance maximale, il peut émettre en direction de la station terrestre GSO_SOL.

Pour le satellite NGSO1, son angle topocentrique minimal αNGSO1 est inférieur au premier seuil αr, il se trouve donc en première zone ZR et sa puissance d'émission est limitée à PR.

Pour le satellite NGSO2, son angle topocentrique minimal αNGSO2 est supérieur au second seuil αo, il se trouve donc en troisième zone ZB et sa puissance d'émission est limitée à Pmax.

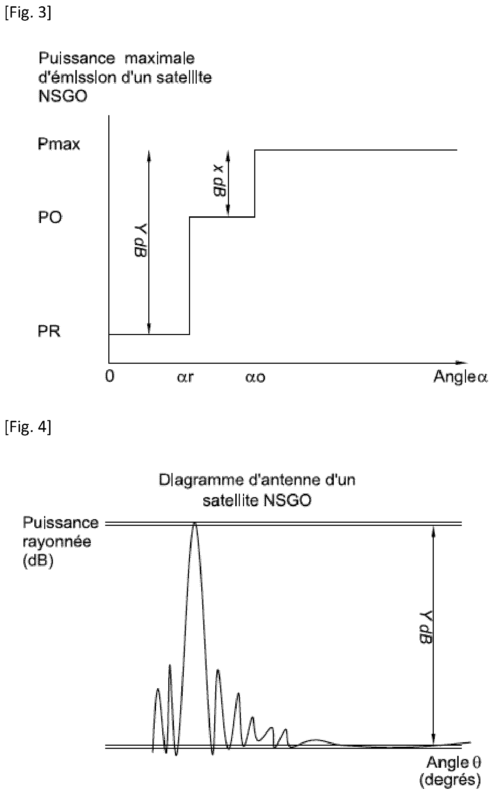

Un exemple de représentation graphique de la puissance maximale en fonction de l'angle topocentrique minimal α est donné en figure 3. La figure 3 représente la puissance d'émission maximale d'un satellite non-géostationnaire émettant des signaux de brouillage en direction d'une station terrestre géostationnaire. La puissance maximale est fonction de l'angle α défini pour la station terrestre géostationnaire et le satellite non-géostationnaire de la constellation considéré. Les différents seuils angulaires αr, αo associés aux seuils de puissance PR, PO et Pmax sont représentés sur la figure 3. Les seuils angulaires ar et ao permettent de définir les zones ZR, ZO et ZB dans lesquelles la puissance d'émission du satellite non-géostationnaire est limitée par les seuils de puissance PR, PO et Pmax.

Pmax est définie selon les contraintes vis-à-vis du système géostationnaire grâce au procédé selon l'invention. La différence entre Pmax et PO, représentée en figure 3 par X dB, représente la diminution maximale de puissance PIRE que peut supporter le système non-géostationnaire pour garantir un service à un utilisateur sur Terre. La différence entre Pmax et PR, représentée en figure 3 par Y dB, représente la diminution de puissance PIRE du satellite non-géostationnaire liée à la réjection de son antenne.

La Figure 4 représente un diagramme d'antenne d'un satellite non-géostationnaire avec en abscisses un angle θ en degrés et en ordonnées une puissance normalisée rayonnée en décibels dB. Celui-ci permet de déterminer la différence Y dB, donc la première valeur seuil PR. Sur le diagramme d'antenne, on relève la différence entre le lobe principal et la valeur plancher, représentée sur la figure 4 par Y dB. La valeur PR sera alors égale à la différence entre Pmax et Y, Y étant exprimé en décibels.

La définition de ces seuils de puissance maximale PR, PO et Pmax en fonction de seuils angulaires αr et αo permet ainsi de minimiser les interférences d'un satellite non-géostationnaire émettant vers un point sur Terre sur la liaison entre une station terrestre placée en ce point sur Terre et un satellite géostationnaire.

Une fois que les seuils de puissance PR, PO, Pmax et les seuils angulaires αr et αo sont déterminés, les zones déterminées, pour un point donné sur Terre, sont les mêmes pour chaque satellite non-géostationnaire de la constellation de satellites non-géostationnaires émettant vers ce point de la Terre. Pour un point donné sur Terre, on utilisera la même définition de zones (αr et αo) vis-à-vis de ce point pour tous les satellites de la constellation émettant vers ce point. Comme ces zones sont définies pour un seul point sur Terre, il faudra donc déterminer des nouvelles zones pour un autre point sur Terre.

Selon le type de système isoFLUX ou isoPIRE, il faudra adapter les valeurs de puissance Pmax, PO et PR pour chaque satellite de la constellation non-géostationnaire.

Un système isoPIRE est un système dans lequel tous les satellites non-géostationnaires de la constellation, qui émettent en direction de la même station terrestre, sont configurés pour avoir la même puissance d'émission vers cette station terrestre.

Un système isoFLUX est un système dans lequel tous les satellites non-géostationnaire de la constellation, qui émettent en direction de la même station terrestre, sont configurés pour avoir une puissance d'émission telle que la puissance reçue par cette station terrestre est la même pour chacun de ces satellites.

Ainsi, pour un système isoPIRE et pour un point donné sur Terre, on utilisera également les mêmes puissances maximales (Pmax, PO et PR) pour tous les satellites de la constellation émettant vers ce point sur Terre ; tandis que pour un système isoFLUX et pour un point sur Terre, les puissances maximales déterminées par le procédé (Pmax, PO et PR) correspondent aux puissances maximales du satellite de la constellation situé au nadir de ce point sur Terre. Un autre satellite de la constellation, différent du satellite au nadir du point sur Terre, a des valeurs de puissance maximales (Pmax, PO et PR) ajustées de + x dB, avec x correspondant à la différence de perte de propagation entre ce satellite et le satellite au nadir, et la perte de propagation correspondant à l'atténuation de puissance entre la puissance reçue par la station terrestre venant du satellite au nadir et un autre satellite de la constellation. L'atténuation de puissance est due à la différence de trajet entre le satellite au nadir de la station et cet autre satellite de la constellation.

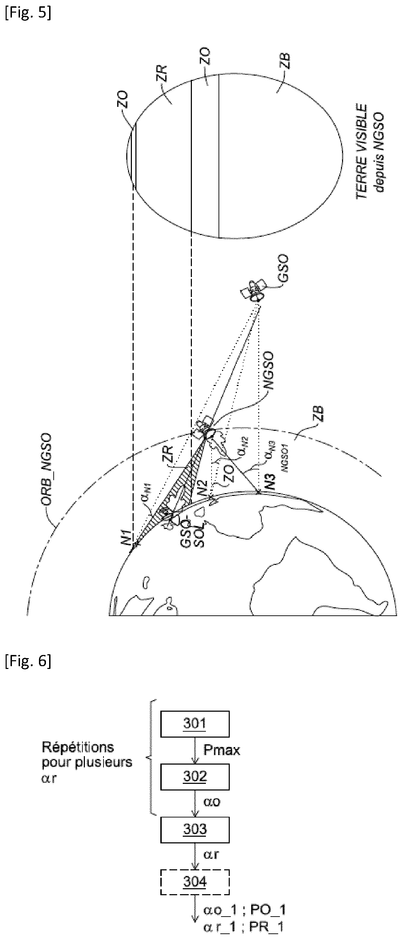

La Figure 5 représente les zones ZR, ZO et ZB du point de vue d'un satellite non-géostationnaire par rapport à plusieurs points sur Terre vers lesquels il émet. Pour un satellite non-géostationnaire NGSO fixé, on peut définir ces mêmes zones ZR, ZO et ZB par rapport à ce satellite émettant vers la Terre.

Si le satellite NGSO émet en direction du point N1, l'angle topocentrique minimal aN1 est inférieur au premier seuil, donc vers ce point N1, le satellite NGSO est en première zone ZR.

Si le satellite NGSO émet en direction de la station terrestre GSO_SOL, l'angle topocentrique minimal est quasiment nul (car le satellite NGSO, la station terrestre et un point de l'arc géostationnaire sont alignés), donc il est toujours inférieur au premier seuil αr, le satellite NGSO est toujours en première zone ZR.

Si le satellite NGSO émet en direction du point N2, l'angle topocentrique minimal αN2 est supérieur au premier seuil αr mais est inférieur au second seuil αo, le satellite NGSO est donc en deuxième ZO.

Enfin, si le satellite NGSO émet en direction du point N3, l'angle topocentrique minimal αN3 est supérieur au second seuil αo, le satellite NGSO est donc en troisième zone ZB.

La Terre visible depuis le satellite NGSO peut être représentée comme une ellipse découpée en bandes où chacune des bandes représente une zone ZR, ZO ou ZB dans laquelle peut émettre le satellite NGSO avec une valeur de puissance maximale d'émission définie.

La Figure 6 présente un schéma des étapes du procédé selon un premier mode de réalisation de l'invention.

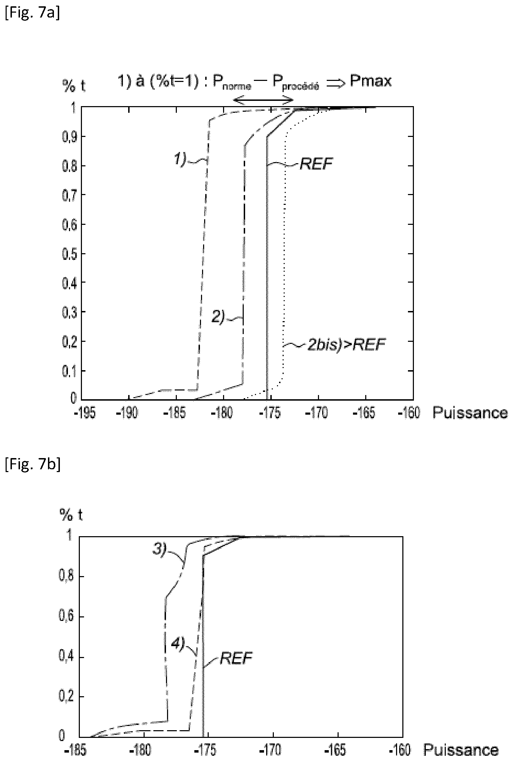

Dans une première étape 1) 301, on va déterminer la valeur du troisième seuil de puissance Pmax. Pour cela, on fixe arbitrairement une valeur du premier seuil angulaire αr et une valeur du second seuil angulaire αo. Avec ces valeurs fixées, on réalise des simulations du niveau de puissance reçu par la station terrestre pour plusieurs instants successifs d'un intervalle de temps venant d'un satellite non-géostationnaire de la constellation. Ensuite, on détermine la distribution des niveaux de puissance reçus par la station et cumulés dans l'intervalle de temps, ce qui donne une courbe représentant la distribution des niveaux de puissance cumulés et reçus par la station avec en abscisse les niveaux de puissance reçus par la station au cours du temps et en ordonnées un pourcentage de temps, le pourcentage 100% représentant l'intervalle de temps complet. On compare alors cette distribution à une distribution de référence, pour déterminer la valeur du troisième seuil de puissance Pmax de manière à minimiser l'écart entre la distribution de référence et la distribution des niveaux de puissance cumulés, la distribution des niveaux de puissance cumulés restant inférieure à la distribution de référence. Un exemple de cette comparaison avec la distribution de référence est détaillé en référence à la figure 7a.

La distribution de référence est définie par une norme comme un seuil acceptable pour ne pas interférer sur la liaison entre la station terrestre et le satellite géostationnaire, l'objectif de l'invention étant de s'approcher au plus près de ce seuil acceptable.

Dans une seconde étape 2) du procédé 302, on va déterminer la valeur du second seuil angulaire ao. Pour cela, on fixe la valeur du premier seuil angulaire ar qui sera égal à la même valeur que celle fixée dans l'étape 1) et on fixe la valeur du troisième seuil de puissance Pmax à la valeur déterminée à l'étape 1). Avec ces valeurs, on réalise des simulations, pour plusieurs valeurs de second seuil angulaire αo, du niveau de puissance reçu par la station terrestre aux mêmes instants qu'à l'étape 1). On détermine ensuite la distribution des niveaux de puissance reçus par le point sur Terre et cumulés dans l'intervalle de temps pour chaque valeur de second seuil angulaire. On compare ensuite ces distributions de niveaux de puissance cumulés à la distribution de référence, pour déterminer quelle est la valeur de second seuil angulaire αo qui permet de minimiser la différence αo - αr et qui permet toujours de minimiser l'écart entre la distribution de référence et les distributions des niveaux de puissance cumulés. Le second seuil angulaire αo sera alors égal à cette valeur.

Ces deux étapes sont réalisées pour une seule valeur de premier seuil angulaire αr. Afin de déterminer la valeur du premier seuil angulaire αr, on répète les étapes 1) et 2) en modifiant la valeur de αr à chaque répétition. En répétant ces étapes 1) et 2) pour différentes valeurs de αr, on obtient autant de triplets (αr, αo, Pmax) qu'il y a eu de répétitions des étapes 1) et 2).

Puis, dans une troisième étape 3) du procédé 303, on va chercher à déterminer la valeur du premier seuil angulaire αr, qui sera égale à l'une des valeurs utilisées pour répéter les étapes 1) et 2), autrement dit, on va chercher à déterminer quel triplet (αr, αo, Pmax), parmi les triplets obtenus par les répétitions des étapes 1) et 2), est le plus intéressant pour la constellation.

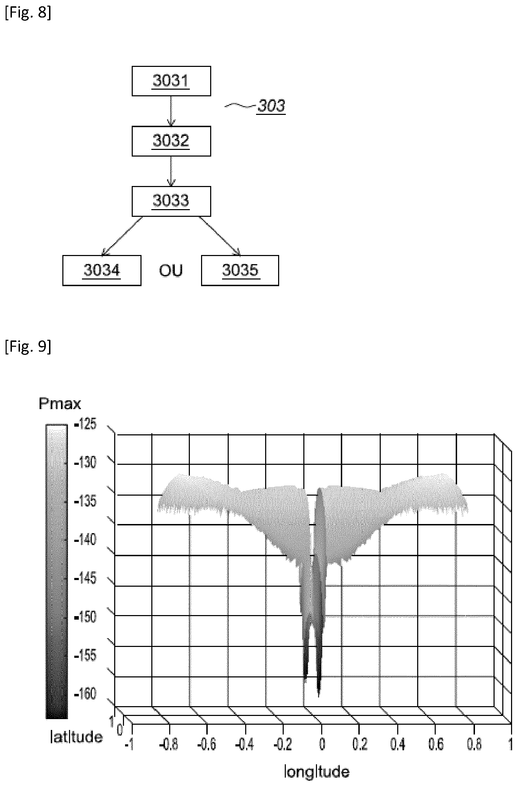

Pour cela, on peut étudier, par exemple, la qualité de service de la constellation de satellites non-géostationnaires, en particulier le nombre de bits par seconde par hertz que l'on peut envoyer vers des stations terrestres, et la valeur de ar sera déterminée de manière à respecter un critère de qualité de service. Cette étape est détaillée en référence à la figure 8.

La Figure 8 représente un schéma détaillant la réalisation de l'étape 3) du procédé selon un mode de réalisation de l'invention.

Dans cet exemple, on détermine le triplet (αr, αo, Pmax) et donc la valeur du premier seuil angulaire αr en calculant par simulation la capacité de la constellation de satellites non-géostationnaires vis-à-vis de la station terrestre pour plusieurs instants.

Dans une première étape 3031, on sélectionne des satellites non-géostationnaires pouvant émettre vers la station terrestre à chaque instant d'un intervalle de temps pour chaque triplet de valeurs (αr, αo, Pmax). Les satellites sélectionnés sont ceux capables de rendre un service en direction de la station terrestre, donc les satellites non-géostationnaires présentant un angle alpha α supérieur à la valeur ar du triplet.

A l'issue de la première étape, il y a donc un ensemble de satellites non-géostationnaires sélectionnés pour chaque triplet (αr, αo, Pmax).

Puis dans une seconde étape 3032, on détermine par simulations les niveaux de puissances reçus par la station et les niveaux de puissance émis par les satellites non-géostationnaires sélectionnés pour chaque instant et pour chaque triplet (αr, αo, Pmax), sachant que les satellites sélectionnés auront chacun une puissance d'émission maximale égale à PO ou Pmax selon leur valeur d'angle topocentrique minimal (inférieure ou supérieure à αo).

Puis, dans l'étape suivante 3033, on calcule la capacité de la constellation pour chaque instant et pour chaque triplet (αr, αo, Pmax), autrement dit, on calcule l'efficacité spectrale reçue par la station terrestre pour chaque instant et pour chaque triplet (αr, αo, Pmax), l'efficacité spectrale étant exprimée en bits/s/Hz. A la place de l'efficacité spectrale, il est également possible de calculer le débit reçu par la station terrestre qui s'exprime en bits/s.

Avec ces valeurs de capacité pour chaque instant, on peut déterminer le triplet (αr, αo, Pmax) et donc la valeur de αr de plusieurs manières. Les étapes 3034 et 3035 détaillent deux de ces manières.

A la suite de l'étape 3033, on peut additionner toutes les valeurs de capacité obtenues aux différents instants pour chaque triplet (αr, αo, Pmax) 3034, et le triplet (αr, αo, Pmax) donnant la valeur de αr, qui sera retenue par le procédé, est celui donnant la somme des capacités la plus élevée.

A la suite de l'étape 3033, on peut, à la place de l'étape 3034, calculer les capacités cumulées sur l'intervalle de temps pour chaque triplet (αr, αo, Pmax) 3035. Le triplet (αr, αo, Pmax) donnant la valeur de ar, qui sera retenue par le procédé, est celui donnant la capacité la plus élevée pour un certain pourcentage de temps, par exemple pour 95% du temps.

Une étape supplémentaire 4) (304) de raffinement des limites de puissance maximale en fonction de l'angle α peut également être présente. Elle consiste à définir des valeurs seuils supplémentaires de puissance et des seuils angulaires supplémentaires de manière à réduire l'écart entre la distribution de référence et la distribution des niveaux de puissance reçus et cumulés par la station terrestre.

L'objectif de cette étape de raffinement est d'ajouter des seuils de puissance et des seuils angulaires entre les seuils déjà déterminés de manière à minimiser les interférences du satellite non-géostationnaire vers un point sur Terre tout en ayant une puissance d'émission forte. En effet, quand on s'approche d'un seuil angulaire, le seuil de puissance associé peut être légèrement dépassé, puisqu'avec un angle égal à ce seuil angulaire, on passe à une limite de puissance égale à un autre seuil plus élevé. On cherche donc dans cette étape à relâcher les contraintes de niveau de puissance au sein d'une zone grâce à la détermination de ces seuils supplémentaires.

Ainsi, dans cette étape, on cherche à déterminer au moins un seuil de puissance et un seuil angulaire intermédiaire avant le premier seuil angulaire et entre le premier et second seuil angulaire. Comme pour les étapes précédentes, pour faire cela, on fait varier une valeur de seuil angulaire αr_1 associé à un seuil de puissance PR_1, αr_1 étant inférieur à ar et PR_1 étant supérieur à PR et inférieur au seuil de puissance PO, de manière à s'approcher le plus possible de la norme. On peut également déterminer une valeur de seuil angulaire αo_1 associé à un seuil de puissance PO_1 où αo_1 est supérieur à αr et inférieur à αo et PO_1 est supérieur à PO et inférieur à Pmax.

Comme précédemment, cela est réalisé en effectuant des simulations des niveaux de puissance reçus par le point sur Terre à plusieurs instants dans l'intervalle de temps en prenant les valeurs de Pmax, αr et αo déterminées dans les étapes précédentes et en faisant varier les valeurs des seuils supplémentaires. Puis on détermine les niveaux de puissance reçus et cumulés dans l'intervalle de temps pour chacune des valeurs de seuils supplémentaires simulés. On les compare au niveau de référence et on choisit les valeurs de seuils supplémentaires qui permettent de minimiser la différence entre le niveau de référence et les niveaux cumulés tout en la gardant positive.

Les étapes 1) à 4) sont réalisées pour une station terrestre géostationnaire en un point sur Terre.

Selon un autre mode de réalisation, ces étapes sont réalisées pour une pluralité de stations terrestres géostationnaires représentant N points sur Terre, N étant un entier. Les étapes 1) à 4) sont donc répétées N fois. A chaque fois que le point sur Terre varie, les zones ZR, ZO et ZB ainsi que leurs seuils angulaires αr et αo et leurs valeurs limite de puissance PR, PO et Pmax sont à nouveau définies par le procédé. En effet, pour un même satellite géostationnaire considéré, l'angle topocentrique minimal α varie quand le point sur Terre varie, comme le représente la figure 5. Pour N points sur Terre considérés, le procédé est donc répété N fois.

Ainsi, le procédé de l'invention peut également être mis en œuvre de manière à minimiser les interférences entre des satellites d'une constellation de satellites non-géostationnaires et un système géostationnaire comprenant l'ensemble des satellites géostationnaires de l'arc géostationnaire et toutes les stations terrestres géostationnaires.

Selon un autre mode de réalisation, les simulations effectuées dans les étapes 1) et 2) ne déterminent non pas les niveaux de puissance reçus par la station terrestre émis par un seul satellite non-géostationnaire, mais les niveaux de puissance reçus par la station terrestre et émis par plusieurs satellites non-géostationnaires. Cela permet de prendre en compte les cas où plusieurs satellites non-géostationnaires émettent en direction d'un même point sur Terre.

Les niveaux de puissance limites PR, PO et Pmax prennent alors en compte toutes les émissions de signaux de la constellation non-géostationnaire en direction de ce point sur Terre et sont les mêmes pour chaque satellite de la constellation émettant vers ce point.

Selon un autre mode de réalisation, l'étape 1) comprend également la sélection du ou des satellites de la constellation non-géostationnaire, utilisés pour la mise en œuvre du procédé, notamment pour les simulations des niveaux de puissance reçus par la station terrestre, pour chaque instant de l'intervalle de temps. Les niveaux de puissance simulés et reçus par le point sur Terre sont alors issus uniquement de ces satellites sélectionnés. Cela permet de sélectionner les satellites non-géostationnaires les plus pertinents pour effectuer ces simulations et ainsi limiter les temps de calcul.

Les satellites sélectionnés seront par exemple, ceux présentant le niveau de puissance reçu par le point sur Terre le plus élevé. Ils pourront être, selon un autre exemple, les satellites ayant un angle topocentrique minimal inférieur au premier seuil angulaire αr fixé pour l'étape 1) du procédé.

Il est important de conserver le même critère de sélection entre chaque répétition des étapes 1) et 2), c'est-à-dire entre chaque variation de l'angle αr.

Après avoir déterminé les valeurs des seuils angulaires αr et αo ainsi que les puissances maximales d'émission associées aux zones pour un point sur Terre vers lequel émet un satellite de la constellation, on peut déterminer la puissance maximale d'émission de ce satellite. Pour cela, on détermine la valeur minimale de l'angle topocentrique formé par ce point sur Terre, le satellite de la constellation émettant vers ce point et un point de l'arc géostationnaire. Puis on compare cette valeur minimale aux seuils angulaires : si la valeur minimale de l'angle topocentrique est inférieure à ar, alors le satellite aura une puissance d'émission limitée à PR, si la valeur minimale de l'angle topocentrique est comprise entre αr et αo, alors le satellite aura une puissance d'émission limitée à PO, et si la valeur minimale de l'angle topocentrique est supérieure à Pmac, alors le satellite aura une puissance d'émission limitée à Pmax.

Si plusieurs satellites de la constellation non-géostationnaire émettent vers le même point sur Terre, on applique cela à chaque satellite. Ainsi chaque satellite aura sa propre limite de puissance d'émission selon sa valeur minimale d'angle topocentrique.

Selon un autre mode de réalisation de l'invention, le procédé comprend également des étapes supplémentaires effectuées après l'étape 3) qui permettent d'ajuster les valeurs de puissance maximale d'émission à une situation opérationnelle.

Ces étapes supplémentaires consistent à sélectionner, dans une étape 4), pour chaque instant de l'intervalle de temps, des satellites non-géostationnaires ayant une valeur d'angle topocentrique minimale α supérieure au premier seuil angulaire ar défini à l'étape 3) du procédé vis-à-vis de la station terrestre considérée et de l'arc géostationnaire. Les satellites sélectionnés ont donc une puissance d'émission égale à PO si leur angle topocentrique minimal α est inférieur au second seuil αo ou une puissance d'émission égale à Pmax si leur angle topocentrique minimal α est supérieur au second seuil αo.

Dans une étape suivante 5), on simule les niveaux de puissance émis par ces satellites sélectionnés et reçus par la station terrestre cumulés sur l'intervalle de temps.

Puis dans une étape 6), on identifie des instants de l'intervalle de temps et on ajuste la troisième valeur maximale de puissance Pmax de ces instants de manière à minimiser l'écart entre une distribution des niveaux de puissance reçus par la station terrestre et cumulés sur l'intervalle de temps et la distribution de référence REF, la distribution de référence étant supérieure aux niveaux de puissance cumulés.

La Figure 7a présente un exemple de comparaison de la distribution des niveaux de puissance reçus par la station terrestre et cumulés issus des simulations des étapes 1) et 2) avec la distribution de référence (REF). Les niveaux de puissance reçus par la station sont représentés en abscisses et le pourcentage de temps est représenté en ordonnées. La distribution de référence REF donne les valeurs limite autorisées de puissance reçue par la station depuis le satellite non-géostationnaire en fonction du temps. Par exemple, le satellite ne peut jamais émettre avec un niveau de puissance reçu au sol au-delà de -160 dBW/m²/40kHz, tandis que 50% du temps, il doit présenter un niveau de puissance inférieur à - 175 dBW/m²/40kHz.

La distribution des niveaux de puissance cumulés obtenue à l'étape 1) est représentée par la courbe 1). En comparant cette distribution 1) à la référence REF, on peut déterminer la valeur du troisième seuil de puissance Pmax. L'objectif est de translater la courbe issue des simulations vers la courbe de référence tout en restant inférieur à cette référence. La translation effectuée permet de déterminer la valeur de Pmax.

Après avoir déterminé la valeur seuil Pmax, on obtient la distribution 2) de niveaux de puissance cumulés. On remarque que cette distribution est toujours inférieure à la référence REF et qu'il est peut-être possible de s'en approcher un peu plus. Le but de l'étape 2) est donc de faire varier les valeurs du second seuil angulaire ao pour se rapprocher de la distribution de référence REF. La courbe 2) et 2bis) représentent deux distributions de niveaux de puissance reçus par la station terrestre et cumulés sur l'intervalle de temps pour deux valeurs de ao différentes. On remarque que la distribution 2bis) présente des niveaux de puissance supérieurs à la référence REF, donc la valeur de seuil angulaire donnant cette distribution 2bis) est éliminée.

La Figure 7b] présente un exemple de comparaison de la distribution des niveaux de puissance reçus par la station et cumulés dans le temps avec la distribution de référence REF pour l'étape 4) de raffinement. Les niveaux de puissance reçus par la station terrestre sont représentés en abscisses et le pourcentage de temps est représenté en ordonnées. Comme pour les étapes précédentes, on cherche à se rapprocher de la distribution de référence REF. Lors de l'étape 4), on introduit des valeurs de seuils angulaires et de puissance supplémentaires, qui permettent de relâcher les contraintes sur les niveaux de puissance en bordure des zones ZR et ZO, et ainsi de passer de la distribution 3) à la distribution 4) pour minimiser l'écart entre la distribution de référence REF et la distribution des niveaux de puissance cumulés et reçus par la station.

Si le procédé est réalisé pour une pluralité de stations terrestres, on peut déterminer des seuils de puissance Pmax, PO, PR et des seuils angulaires ar, ao selon la figure 3 pour chacune de ces stations terrestres, et ensuite représenter les puissances maximales d'émission du satellite non-géostationnaire en fonction de n'importe quel point sur Terre.

La Figure 9 présente une figure représentant les puissances maximales d'émission d'un satellite non-géostationnaire en fonction de n'importe quel point sur Terre, défini par sa latitude et longitude. Cette figure est obtenue en agrégeant des puissances maximales d'émission en fonction de l'angle a, du même type que celui de la figure 3, déterminées pour plusieurs stations terrestres. La position du point sur Terre (ou de la station terrestre) se trouve en abscisses (longitude et latitude) et la puissance maximale d'émission du satellite non-géostationnaire est donnée en ordonnées. Ainsi, on peut voir sur cette figure que pour un point se trouvant proche de l'Equateur, la constellation ne pourra émettre au maximum qu'avec un niveau de -160 dB, alors qu'en s'approchant des pôles, elle pourra émettre au maximum avec un niveau de puissance de -135 dB.

L'invention peut être mise en œuvre en tant que programme d'ordinateur comportant des instructions pour son exécution. Le programme d'ordinateur peut être enregistré sur un support d'enregistrement lisible par un processeur. Le support peut être électronique, magnétique, optique ou électromagnétique.

En particulier, l'invention peut être implémentée par un dispositif comprenant un processeur et une mémoire. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

Le dispositif peut utiliser un ou plusieurs circuits électroniques dédiés ou un circuit à usage général. La technique de l'invention peut se réaliser sur une machine de calcul reprogrammable (un processeur ou un micro-contrôleur par exemple) exécutant un programme comprenant une séquence d'instructions, ou sur une machine de calcul dédiée (par exemple un ensemble de portes logiques comme un FPGA ou un ASIC, ou tout autre module matériel).

Selon un mode de réalisation, le dispositif comprend au moins un support de stockage lisible par ordinateur (RAM, ROM, EEPROM, mémoire flash ou une autre technologie de mémoire, CD-ROM, DVD ou un autre support à disque optique, cassette magnétique, bande magnétique, disque de stockage non transitoire lisible par ordinateur) codé avec un programme d'ordinateur (c'est-à-dire plusieurs instructions exécutables) qui, lorsqu'il est exécuté sur un processeur ou plusieurs processeurs, effectue les fonctions des modes de réalisation de l'invention décrits précédemment.

A titre d'exemple d'architecture matérielle adaptée à mettre en œuvre l'invention, un dispositif selon l'invention peut comporter un bus de communication auquel sont reliées une unité centrale de traitement ou microprocesseur (CPU, acronyme de « Central Processing Unit » en anglais), une mémoire morte (ROM, acronyme de « Read Only Memory » en anglais) pouvant comporter les programmes nécessaires à la mise en œuvre de l'invention ; une mémoire vive ou mémoire cache (RAM, acronyme de « Random Access Memory » en anglais) comportant des registres adaptés à enregistrer des variables et paramètres créées et modifiés au cours de l'exécution des programmes précités ; et une interface de communication ou E/S (I/O, acronyme de « Input/Output » en anglais) adaptée à transmettre et à recevoir des données.

La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en œuvre des aspects des techniques décrites ici. Les moyens ou ressources informatiques peuvent notamment être distribués (« Cloud computing »), éventuellement avec selon des technologies de pair-à-pair. Le code logiciel peut être exécuté sur n'importe quel processeur approprié (par exemple, un microprocesseur) ou cœur de processeur ou un ensemble de processeurs, qu'ils soient prévus dans un dispositif de calcul unique ou répartis entre plusieurs dispositifs de calcul (par exemple tels qu'éventuellement accessibles dans l'environnement du dispositif). Le code exécutable de chaque programme permettant au dispositif programmable de mettre en œuvre les processus selon l'invention, peut être stocké, par exemple, dans le disque dur ou en mémoire morte. De manière générale, le ou les programmes pourront être chargés dans un des moyens de stockage du dispositif avant d'être exécutés. L'unité centrale peut commander et diriger l'exécution des instructions ou portions de code logiciel du ou des programmes selon l'invention, instructions qui sont stockées dans le disque dur ou dans la mémoire morte ou bien dans les autres éléments de stockage précités.

## Revendications

1. Procédé, mis en œuvre par ordinateur, de détermination d'une puissance maximale d'émission (Pmax, PR, PO) d'un satellite non-géostationnaire (NSGO1, NGSO2) en direction d'une station terrestre (GSO_SOL), le procédé comprenant les étapes de :
- déterminer la valeur minimale d'un angle topocentrique (αNGSO1, αNGSO2), formé entre d'une part la direction entre le satellite non-géostationnaire et la station terrestre et d'autre part entre la station terrestre et un point de l'arc géostationnaire (ARC_GSO) correspondant à l'orbite d'une constellation de satellites géostationnaires (GSO) ;
- comparer, en valeur absolue, la valeur minimale de l'angle topocentrique à au moins deux valeurs seuils (ar, ao) de sorte que :
- si ladite valeur minimale est inférieure, en valeur absolue, au premier seuil (ar), définir la puissance maximale d'émission du satellite non-géostationnaire à une première valeur (PR),
- si ladite valeur minimale est comprise, en valeur absolue, entre le premier seuil et le second seuil (αo), définir la puissance maximale d'émission du satellite non-géostationnaire à une deuxième valeur (PO), supérieure à la première valeur,
- si ladite valeur minimale est supérieure, en valeur absolue au second seuil, définir la puissance maximale d'émission du satellite non-géostationnaire à une troisième valeur (Pmax), supérieure à la deuxième valeur ;
la première, la deuxième et la troisième valeur de puissance maximale d'émission (PR, PO, Pmax), le premier et le second seuil (αr, αo) étant déterminés de manière à minimiser l'écart entre une distribution des niveaux de puissance reçus par la station terrestre (GSO_SOL) et cumulés sur un intervalle de temps et une distribution de référence (REF), la distribution des niveaux de puissance reçus et cumulés étant inférieure à la distribution de référence (REF).

2. Procédé de détermination d'une puissance maximale d'émission d'un satellite non-géostationnaire selon la revendication 1 dans lequel les seuils (αr, αo) et les valeurs de puissance (PR, PO, Pmax) sont déterminées par les étapes suivantes :
1) Pour une valeur du premier seuil angulaire (αr) et pour une valeur du second seuil angulaire (αo) : simulations des niveaux de puissance reçus par la station terrestre (GSO_SOL) et cumulés sur un intervalle de temps, comparaison d'une distribution des niveaux de puissance cumulés à la distribution de référence (REF) et détermination de la valeur du troisième seuil de puissance (Pmax) de manière à minimiser l'écart entre la distribution de référence (REF) et la distribution des niveaux de puissance cumulés ;
2) Pour la même valeur de premier seuil angulaire (αr) de l'étape 1) et pour la valeur de troisième seuil de puissance (Pmax) déterminée à l'étape 1) : simulations, pour plusieurs valeurs de second seuil angulaire (αo), des niveaux de puissance reçus par la station (GSO_SOL) et cumulés sur un intervalle de temps, comparaison d'une distribution des niveaux de puissance cumulés à la distribution de référence (REF) pour chaque valeur de second seuil angulaire et détermination de la valeur du second seuil angulaire (αo) parmi les valeurs simulées de manière à minimiser l'écart entre la distribution de référence (REF) et la distribution des niveaux de puissance cumulés, et de manière à ce que la différence entre le second seuil angulaire (αo) et le premier seuil angulaire (αr) soit minimale.

3. Procédé de détermination d'une puissance maximale d'émission d'un satellite non-géostationnaire selon la revendication 2 dans lequel les étapes 1) et 2) sont répétées successivement, la valeur du premier seuil angulaire (αr) étant différente entre chaque répétition, de manière à obtenir un triplet de valeurs du premier seuil, du second seuil et de la troisième valeur de puissance (αr, αo, Pmax) à chaque répétition.

4. Procédé de détermination d'une puissance maximale d'émission d'un satellite non-géostationnaire selon la revendication 3 comprenant l'étape suivante exécutée après la répétition des étapes 1) et 2) :
3) Détermination du triplet de valeurs du premier seuil, du second seuil et de la troisième valeur de puissance (αr, αo, Pmax) parmi les triplets obtenus par les répétitions des étapes 1) et 2) de manière à respecter un critère de qualité de service minimale rendue par un système non-géostationnaire auquel appartient le satellite non-géostationnaire.

5. Procédé de détermination d'une puissance maximale d'émission d'un satellite non-géostationnaire selon la revendication 4 dans lequel l'étape 3) comprend, pour chaque triplet de valeurs (αr, αo, Pmax) et pour chaque instant d'un intervalle de temps, la détermination des satellites non-géostationnaires ayant une valeur minimale d'angle topocentrique (α, αNGSO1, αNGSO2) supérieure au premier seuil (αr) du triplet (3031), et la simulation des puissances émises par ces satellites déterminés vers la station terrestre et des puissances reçues par la station terrestre (3032) afin de déterminer un débit reçu par la station terrestre à chaque instant (3033) et pour chaque triplet de manière à sélectionner (3034, 3035) l'un des triplets de valeurs (αr, αo, Pmax).

6. Procédé de détermination d'une puissance maximale d'émission d'un satellite non-géostationnaire selon la revendication 5 dans lequel le triplet de valeurs (αr, αo, Pmax) déterminé est celui dont la somme des débits à chaque instant est la plus élevée (3034).

7. Procédé de détermination d'une puissance maximale d'émission d'un satellite non-géostationnaire selon la revendication 5 dans lequel le triplet de valeurs (αr, αo, Pmax) déterminé est celui dont le débit est maximal pour une proportion prédéterminée de l'intervalle de temps (3035).

8. Procédé de détermination d'une puissance maximale d'émission d'un satellite non-géostationnaire selon l'une des revendications 4 à 7 comprenant les étapes suivantes effectuées après l'étape 3) :
4) Pour chaque instant de l'intervalle de temps, sélectionner des satellites non-géostationnaires ayant une valeur d'angle topocentrique minimale (α) supérieure au premier seuil angulaire (αr) ;
5) simulation des niveaux de puissance émis par les satellites sélectionnés à l'étape 4) et reçus par la station terrestre cumulés sur l'intervalle de temps ;
6) identification des instants de l'intervalle de temps et ajustement de la troisième valeur maximale de puissance (Pmax) de manière à minimiser l'écart entre une distribution des niveaux de puissance reçus par la station terrestre et cumulés sur l'intervalle de temps et la distribution de référence (REF), la distribution de référence étant supérieure aux niveaux de puissance cumulés.

9. Procédé de détermination d'une puissance maximale d'émission d'un satellite non-géostationnaire selon l'une des revendications 4 à 8 comprenant également une étape de raffinement (304) consistant à déterminer des seuils angulaires (αr_1, αo_1) et des seuils de puissance (PR_1, PO_1) supplémentaires de manière à réduire l'écart entre les niveaux de puissance cumulés de l'étape 3) et le niveau de référence (REF), les niveaux de puissance cumulés étant inférieurs au niveau de référence.

10. Procédé de détermination d'une puissance maximale d'émission d'un satellite non-géostationnaire selon l'une des revendications 1 à 9 dans lequel le procédé est mis en œuvre pour une pluralité d'hypothèses de positions de stations terrestres.

11. Procédé de détermination d'une puissance maximale d'émission d'un satellite non-géostationnaire selon l'une des revendications 1 à 10 comprenant également une sélection d'au moins un satellite d'une constellation de satellites non-géostationnaires à chaque instant, les niveaux de puissance reçus par la station résultant de signaux émis par les satellites sélectionnés.

12. Procédé de détermination d'une puissance maximale d'émission d'un satellite non-géostationnaire selon la revendication 11 dans lequel le satellite sélectionné est celui présentant la puissance reçue par la station terrestre la plus élevée.

13. Procédé de détermination d'une puissance maximale d'émission d'un satellite non-géostationnaire selon la revendication 11 dans lequel le satellite sélectionné est celui situé au nadir de la station terrestre.

14. Procédé de détermination d'une puissance maximale d'émission d'un satellite non-géostationnaire selon la revendication 13 comprenant une étape de correction de la première (PR), de la seconde (PO) et de la troisième (Pmax) valeurs maximales de puissance d'émission d'un satellite non-géostationnaire de la constellation, situé en un point différent du nadir de la station terrestre, de manière à ce que la puissance reçue par la station terrestre de ce satellite de la constellation soit égale à la puissance reçue par la station terrestre du satellite sélectionné situé au nadir.

15. Programme d'ordinateur comportant des instructions pour l'exécution du procédé de détermination d'une puissance maximale d'émission d'un satellite non-géostationnaire selon l'une quelconque des revendications précédentes, lorsque le programme est exécuté par un processeur.

16. Support d'enregistrement lisible par un processeur sur lequel est enregistré un programme comportant des instructions pour l'exécution du procédé de détermination d'une puissance maximale d'émission d'un satellite non-géostationnaire selon l'une quelconque des revendications 1 à 14 ; lorsque le programme est exécuté par un processeur.

## Patentansprüche

1. Computerimplementiertes Verfahren zur Bestimmung einer maximalen Sendeleistung (Pmax, PR, PO) eines nicht geostationären Satelliten (NSGO1, NGSO2) in Richtung einer terrestrischen Station (GSO_SOL), wobei das Verfahren folgende Schritte umfasst:
- Bestimmen des Mindestwertes eines topozentrischen Winkels (αNGSO1, αNGSO2), welcher einerseits zwischen der Richtung zwischen dem nicht geostationären Satelliten und der terrestrischen Station und andererseits zwischen der terrestrischen Station und einem Punkt des geostationären Kreisbogens (ARC_GSO) gebildet ist, welcher der Umlaufbahn einer Konstellation von geostationären Satelliten (GSO) entspricht;
- Vergleichen, in Absolutwert betrachtet, des Mindestwertes des topozentrischen Winkels mit mindestens zwei Schwellenwerten (αr, αo) in einer Weise, dass:
- wenn der Mindestwert, in Absolutwert betrachtet, einen ersten Schwellenwert (αr) unterschreitet, man die maximale Sendeleistung des nicht geostationären Satelliten als einen ersten Wert (PR) definiert,
- wenn der Mindestwert, in Absolutwert betrachtet, zwischen dem ersten Schwellenwert und dem zweiten Schwellenwert (αo) liegt, man die maximale Sendeleistung des nicht geostationären Satelliten als einen zweiten Wert (PO) definiert, welcher größer als der erste Wert ist,
- wenn der Mindestwert, in Absolutwert betrachtet, den zweiten Schwellenwert überschreitet, man die maximale Sendeleistung des nicht geostationären Satelliten als einen dritten Wert (Pmax) definiert, welcher größer als der zweite Wert ist;
wobei der erste, der zweite und der dritte Wert der maximalen Sendeleistung (PR, PO, Pmax), der erste und der zweite Schwellenwert (αr, αo) so bestimmt werden, dass eine Abweichung zwischen einer Verteilung der durch die terrestrische Station (GSO_SOL) empfangenen und über ein Zeitintervall kumulierten Leistungspegel und einer Referenzverteilung (REF) minimiert wird, wobei die Verteilung der empfangenen und kumulierten Leistungspegel kleiner als die Referenzverteilung (REF) ist.

2. Verfahren zur Bestimmung einer maximalen Sendeleistung eines nicht geostationären Satelliten nach Anspruch 1, wobei die Schwellenwerte (αr, αo) und die Leistungswerte (PR, P0, Pmax) durch folgende Schritte bestimmt werden:
1) für einen Wert des ersten Winkelschwellenwertes (αr) und für einen Wert des zweiten Winkelschwellenwertes (αo):
Simulationen der durch die terrestrische Station (GSO_SOL) empfangenen und über ein Zeitintervall kumulierten Leistungspegel, Vergleich einer Verteilung der kumulierten Leistungspegel mit der Referenzverteilung (REF) und Bestimmung des Wertes des dritten Leistungsschwellenwertes (Pmax), sodass eine Abweichung zwischen der Referenzverteilung (REF) und der Verteilung der kumulierten Leistungspegel minimiert wird;
2) für denselben Wert des ersten Winkelschwellenwertes (αr) von Schritt 1) und für den Wert des dritten Leistungsschwellenwertes (Pmax), welcher im Schritt 1) bestimmt wurde:
Simulationen, für mehrere Werte des zweiten Winkelschwellenwertes (αo), der durch die Station (GSO_SOL) empfangenen und über ein Zeitintervall kumulierten Leistungspegel, Vergleich einer Verteilung der kumulierten Leistungspegel mit der Referenzverteilung (REF) für jeden Wert des zweiten Winkelschwellenwertes und Bestimmung des Wertes des zweiten Winkelschwellenwertes (αo) unter den simulierten Werten, um die Abweichung zwischen der Referenzverteilung (REF) und der Verteilung der kumulierten Leistungspegel zu minimieren, und damit die Differenz zwischen dem zweiten Winkelschwellenwert (αo) und dem ersten Winkelschwellenwert (αr) minimal ist.

3. Verfahren zur Bestimmung einer maximalen Sendeleistung eines nicht geostationären Satelliten nach Anspruch 2, wobei die Schritte 1) und 2) nacheinander wiederholt werden, wobei der Wert des ersten Winkelschwellenwertes (αr) zwischen jeder Wiederholung unterschiedlich ist, um ein Wertetripel des ersten Schwellenwertes, des zweiten Schwellenwertes und des dritten Leistungswertes (αr, αo, Pmax) bei jeder Wiederholung zu erzielen.

4. Verfahren zur Bestimmung einer maximalen Sendeleistung eines nicht geostationären Satelliten nach Anspruch 3, welches folgenden Schritt umfasst, welcher nach der Wiederholung der Schritte 1) und 2) ausgeführt wird:
3) Bestimmung des Wertetripels des ersten Schwellenwertes, des zweiten Schwellenwertes und des dritten Leistungswertes (αr, αo, Pmax) unter den durch die Wiederholungen der Schritte 1) und 2) erzielten Wertetripel, um ein Qualitätskriterium der Mindestdienstqualität zu wahren, die durch ein nicht geostationäres System erbracht wird, zu welchem der nicht geostationäre Satellit gehört.

5. Verfahren zur Bestimmung einer maximalen Sendeleistung eines nicht geostationären Satelliten nach Anspruch 4, wobei der Schritt 3) für jedes Wertetripel (αr, αo, Pmax) und für jeden Zeitpunkt eines Zeitintervalls die Bestimmung der nicht geostationären Satelliten umfasst, welche einen Mindestwert eines topozentrischen Winkels (α, αNGSO1, αNGSO2) aufweisen, welcher den ersten Schwellenwert (αr) des Tripels (3031) überschreitet, und die Simulation der durch diese bestimmten Satelliten an die terrestrische Station gesendeten Leistungen und der durch die terrestrische Station (3032) empfangenen Leistungen, um eine durch die terrestrische Station zu jedem Zeitpunkt (3033) und für jedes Wertetripel empfangene Bitrate zu bestimmen, um eines der Wertetripel (αr, αo, Pmax) auszuwählen (3034, 3035).

6. Verfahren zur Bestimmung einer maximalen Sendeleistung eines nicht geostationären Satelliten nach Anspruch 5, wobei das bestimmte Wertetripel (αr, αo, Pmax) dasjenige ist, dessen Bitratensumme zu jedem Zeitpunkt die höchste (3034) ist.

7. Verfahren zur Bestimmung einer maximalen Sendeleistung eines nicht geostationären Satelliten nach Anspruch 5, wobei das bestimmte Wertetripel (αr, αo, Pmax) dasjenige ist, dessen Bitrate für einen vorbestimmten Anteil des Zeitintervalls (3035) maximal ist.

8. Verfahren zur Bestimmung einer maximalen Sendeleistung eines nicht geostationären Satelliten nach einem der Ansprüche 4 bis 7, welches die folgenden Schritte umfasst, welche nach Schritt 3) ausgeführt werden:
4) für jeden Zeitpunkt des Zeitintervalls, Auswählen der nicht geostationären Satelliten, welche einen topozentrischen Mindestwinkelwert (α) aufweisen, welcher den ersten Winkelschwellenwert (αr) überschreitet;
5) Simulieren der durch die im Schritt 4) ausgewählten Satelliten gesendeten und durch die terrestrische Station empfangenen, über den Zeitintervall kumulierten Leistungspegel;
6) Identifizieren der Zeitpunkte des Zeitintervalls und Anpassen des dritten maximalen Leistungswertes (Pmax) in einer Weise, dass die Abweichung zwischen einer Verteilung der durch die terrestrische Station empfangenen und über das Zeitintervall kumulierten Leistungspegel und der Referenzverteilung (REF) minimiert wird, wobei die Referenzverteilung die kumulierten Leistungspegel überschreitet.

9. Verfahren zur Bestimmung einer maximalen Sendeleistung eines nicht geostationären Satelliten nach einem der Ansprüche 4 bis 8, welches ebenfalls einen Schritt der Verfeinerung (304) umfasst, welcher darin besteht, zusätzliche Winkelschwellenwerte (αr_1, αo_1) und Leistungsschwellenwerte (PR_1, PO_1) zu bestimmen, um die Abweichung zwischen den kumulierten Leistungspegeln des Schrittes 3) und dem Referenzpegel (REF) zu reduzieren, wobei die kumulierten Leistungspegel den Referenzpegel unterschreiten.

10. Verfahren zur Bestimmung einer maximalen Sendeleistung eines nicht geostationären Satelliten nach einem der Ansprüche 1 bis 9, wobei das Verfahren für eine Vielzahl von Positionsannahmen von terrestrischen Stationen umgesetzt wird.

11. Verfahren zur Bestimmung einer maximalen Sendeleistung eines nicht geostationären Satelliten nach einem der Ansprüche 1 bis 10, ebenfalls umfassend eine Auswahl von mindestens einem Satelliten einer Konstellation von nicht geostationären Satelliten zu jedem Zeitpunkt, wobei die durch die Station empfangenen Leistungspegel aus Signalen resultieren, welche durch die ausgewählten Satelliten ausgesendet werden.

12. Verfahren zur Bestimmung einer maximalen Sendeleistung eines nicht geostationären Satelliten nach Anspruch 11, wobei der ausgewählte Satellit derjenige ist, der die höchste durch die terrestrische Station empfangene Leistung aufweist.

13. Verfahren zur Bestimmung einer maximalen Sendeleistung eines nicht geostationären Satelliten nach Anspruch 11, wobei der ausgewählte Satellit derjenige ist, der am Nadir der terrestrischen Station befindlich ist.

14. Verfahren zur Bestimmung einer maximalen Sendeleistung eines nicht geostationären Satelliten nach Anspruch 13, umfassend einen Schritt des Korrigierens des ersten (PR), des zweiten (PO) und des dritten (Pmax) Maximalwertes der Sendeleistung eines nicht geostationären Satelliten der Konstellation, welcher an einem vom Nadir unterschiedlichen Punkt der terrestrischen Station befindlich ist, sodass die durch die terrestrische Station von diesem Satelliten der Konstellation empfangene Leistung gleich der Leistung ist, welche durch die terrestrische Station von dem am Nadir befindlichen ausgewählten Satelliten empfangen wird.

15. Computerprogramm, umfassend Anweisungen zur Ausführung des Verfahrens zur Bestimmung einer maximalen Sendeleistung eines nicht geostationären Satelliten nach einem der vorhergehenden Ansprüche, wenn das Programm von einem Prozessor ausgeführt wird.

16. Aufzeichnungsträger, welcher durch einen Prozessor lesbar ist, auf welchem ein Programm aufgezeichnet ist, welches Anweisungen zur Ausführung des Verfahrens zur Bestimmung einer maximalen Sendeleistung eines nicht geostationären Satelliten nach einem der Ansprüche 1 bis 14 umfasst, wenn das Programm von einem Prozessor ausgeführt wird.

## Claims

1. A computer-implemented method for determining a maximum transmission power (Pmax, PR, PO) of a non-geostationary satellite (NSGO1, NGSO2) towards a ground station (GSO_SOL), the method comprising the following steps:
- determining the minimum value of a topocentric angle (*α*NGSO1, *α*NGSO2) formed, on the one hand, between the direction between the non-geostationary satellite and the ground station and, on the other hand, between the ground station and a point of the geostationary arc (ARC_GSO) corresponding to the orbit of a constellation of geostationary satellites (GSO);
- comparing, in terms of absolute value, the minimum value of the topocentric angle with at least two threshold values (*α*r, *α*o), so as to:
- if said minimum value is less, in terms of absolute value, than the first threshold (*α*r), define the maximum transmission power of the non-geostationary satellite at a first value (PR);
- if said minimum value ranges, in terms of absolute value, between the first threshold and the second threshold (*α*o), define the maximum transmission power of the non-geostationary satellite at a second value (PO), greater than the first value;
- if said minimum value is greater, in terms of absolute value, than the second threshold, define the maximum transmission power of the non-geostationary satellite at a third value (Pmax), greater than the second value;
the first, the second and the third maximum transmission power value (PR, PO, Pmax), the first and the second threshold (*α*r, *α*o) being determined so as to minimise the difference between a distribution of the power levels received by the ground station (GSO_SOL) and cumulated over a time interval and a reference distribution (REF), with the distribution of the received and cumulated power levels being less than the reference distribution (REF).

2. The method for determining a maximum transmission power of a non-geostationary satellite as claimed in claim 1, wherein the thresholds (*α*r, *α*o) and the power values (PR, PO, Pmax) are determined by the following steps:
1) for a value of the first angular threshold (*α*r) and for a value of the second angular threshold (*α*o):
simulating the power levels received by the ground station (GSO_SOL) and cumulated over a time interval, comparing a distribution of the cumulated power levels with the reference distribution (REF) and determining the value of the third power threshold (Pmax), so as to minimise the difference between the reference distribution (REF) and the distribution of the cumulated power levels;
2) for the same first angular threshold value (*α*r) of step 1) and for the third power threshold value (Pmax) determined in step 1):
simulating, for a plurality of second angular threshold values (*α*o), power levels received by the station (GSO_SOL) and cumulated over a time interval, comparing a distribution of the cumulated power levels with the reference distribution (REF) for each second angular threshold value and determining the value of the second angular threshold (*α*o) from among the simulated values, so as to minimise the difference between the reference distribution (REF) and the distribution of the cumulated power levels, and so that the difference between the second angular threshold (*α*o) and the first angular threshold (*α*r) is minimal.

3. The method for determining a maximum transmission power of a non-geostationary satellite as claimed in claim 2, wherein steps 1) and 2) are repeated successively, with the value of the first angular threshold (*α*r) being different between each repetition, so as to obtain a triplet of values of the first threshold, of the second threshold and of the third power value (*α*r, *α*o, Pmax) at each repetition.

4. The method for determining a maximum transmission power of a non-geostationary satellite as claimed in claim 3, comprising the following step executed after the repetition of steps 1) and 2):
3) determining the triplet of values of the first threshold, of the second threshold and of the third power value (*α*r, *α*o, Pmax) from among the triplets obtained by the repetitions of steps 1) and 2), so as to comply with a criterion of a minimum quality of service provided by a non-geostationary system to which the non-geostationary satellite belongs.

5. The method for determining a maximum transmission power of a non-geostationary satellite as claimed in claim 4, wherein step 3) comprises, for each triplet of values (*α*r, *α*o, Pmax) and for each instant of a time interval, determining non-geostationary satellites having a minimum topocentric angle value (*α*, *α*NGSO1, *α*NGSO2) greater than the first threshold (*α*r) of the triplet (3031), and simulating the powers transmitted by these determined satellites to the ground station and the powers received by the ground station (3032) in order to determine a throughput received by the ground station at each instant (3033) and for each triplet, so as to select (3034, 3035) one of the triplets of values (*α*r, *α*o, Pmax).

6. The method for determining a maximum transmission power of a non-geostationary satellite as claimed in claim 5, wherein the determined triplet of values (*α*r, *α*o, Pmax) is the triplet for which the sum of the throughputs at each instant is highest (3034).

7. The method for determining a maximum transmission power of a non-geostationary satellite as claimed in claim 5, wherein the determined triplet of values (*α*r, *α*o, Pmax) is the triplet for which the throughput is maximal for a predetermined proportion of the time interval (3035).

8. The method for determining a maximum transmission power of a non-geostationary satellite as claimed in one of claims 4 to 7, comprising the following steps carried out after step 3):
4) for each instant of the time interval, selecting non-geostationary satellites having a minimum topocentric angle value (*α*) greater than the first angular threshold (*α*r);
5) simulating the power levels transmitted by the satellites selected in step 4) and received by the ground station cumulated over the time interval;
6) identifying the instants of the time interval and adjusting the third maximum power value (Pmax), so as to minimise the difference between a distribution of the power levels received by the ground station and cumulated over the time interval and the reference distribution (REF), with the reference distribution being greater than the cumulated power levels.

9. The method for determining a maximum transmission power of a non-geostationary satellite as claimed in one of claims 4 to 8, further comprising a refinement step (304) involving determining additional angular thresholds (*α*r_1, *α*o_1) and power thresholds (PR_1, PO_1), so as to reduce the difference between the cumulated power levels of step 3) and the reference level (REF), the cumulated power levels being less than the reference level.

10. The method for determining a maximum transmission power of a non-geostationary satellite as claimed in one of claims 1 to 9, wherein the method is implemented for a plurality of hypotheses of ground station positions.

11. The method for determining a maximum transmission power of a non-geostationary satellite as claimed in one of claims 1 to 10, further comprising selecting at least one satellite from a constellation of non-geostationary satellites at each instant, with the power levels received by the station resulting from signals transmitted by the selected satellites.

12. The method for determining a maximum transmission power of a non-geostationary satellite as claimed in claim 11, wherein the selected satellite is the satellite with the highest power received by the ground station.

13. The method for determining a maximum transmission power of a non-geostationary satellite as claimed in claim 11, wherein the selected satellite is the satellite located at the nadir of the ground station.

14. The method for determining a maximum transmission power of a non-geostationary satellite as claimed in claim 13, comprising a step of correcting the first (PR), the second (PO) and the third (Pmax) maximum transmission power values of a non-geostationary satellite of the constellation, located at a different point of the nadir of the ground station, so that the power received by the ground station from this satellite of the constellation is equal to the power received by the ground station from the selected satellite located at the nadir.

15. A computer program comprising instructions for executing the method for determining a maximum transmission power of a non-geostationary satellite as claimed in any one of the preceding claims, when the program is executed by a processor.

16. A processor-readable recording medium, on which a program is recorded comprising instructions for executing the method for determining a maximum transmission power of a non-geostationary satellite as claimed in any one of claims 1 to 14, when the program is executed by a processor.
